(19) Europäisches Patentamt
European Patent Office
Office européen des brevets

(11) Publication number: **0 482 160 A1**

(12) **EUROPEAN PATENT APPLICATION published in accordance with Art. 158(3) EPC**

(21) Application number: **91908831.0**

(22) Date of filing: **25.04.91**

(86) International application number: **PCT/ES91/00025**

(87) International publication number: **WO 91/17113 (14.11.91 91/26)**

(51) Int. Cl.5: **C01B 25/46**, C22B 3/38

(30) Priority: **27.04.90 ES 9001215**

(43) Date of publication of application: **29.04.92 Bulletin 92/18**

(84) Designated Contracting States: **BE FR GB**

(71) Applicant: **ERCROS S.A.**
**Avda. de la Diagonal 593-595**
**ES-08014 Barcelona(ES)**

(72) Inventor: **DIAZ NOGUEIRA, Eduardo**
**Rio Duero, 9 Urbanizacion Parque Boadilla**
**D-28660 Boadilla del Monte(ES)**
Inventor: **LAZARO MARTINEZ, Pilar**
**Marcenado, 16**
**E-28002 Madrid(ES)**

(74) Representative: **Garcia Cabrerizo, Francisco**
**OFICINA GARCIA CABRERIZO S.L. Vitruvio 23**
**E-28006 Madrid(ES)**

(54) **METHOD FOR REMOVING CADMIUM FOR PHOSPHORIC ACID.**

(57) Method for removing cadmium from phosphoric acid by the use of the permeation process through a liquid membrane. The method is comprised of: a) formulating an emulsion of the aqueous-in-organic type wherein the dispersed aqueous phase is the reextraction phase and the organic phase contains an extraction agent of formula (I) wherein $R_1$ and $R_2$ are aliphatic, arylic or aromatic radicals and n can be simultaneously 1 or 0; b) dispersing said emulsion in a phosphoric acid solution; c) removing the aqueous phase which contains the cadmium-free phosphoric acid; and d) breaking the cadmium-laden emulsion to recycle the extraction agent. The obtained phosphoric acid may have a cadmium content of 1.5 ppm and may be used in the production of fertilizers. A preferred emulsion contains bis (2,4,4-trimethylpentyl) monothiophosphinic acid as agent for the selective extraction of cadmium.

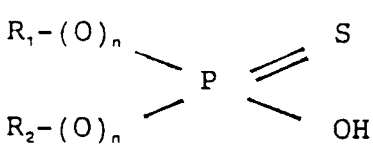

(I)

EP 0 482 160 A1

## SCOPE OF THE INVENTION

The invention relates to the production of a cadmium-free phosphoric acid from a phosphoric acid obtained by the conventional wet process, by a liquid-liquid extraction method using as the medium a selective organic extraction agent capable of separating the cadmium contained in a solution of phosphoric acid. More particularly, the invention relates to the removal of the cadmium present in a phosphoric acid by the use of a liquid membrane which separates two aqueous phases and through which the transfer of cadmium takes place.

## PRIOR ART

Phosphate fertilisers are one of the sources of incorporation of cadmium into the environment since approximately 70% of the cadmium existing as an impurity in phosphoric rock passes into fertiliser phosphoric acid. The growing concern over said contamination has given rise to the study of techniques which allow removal of said contaminant in the fertiliser phosphoric acid. The proposed techniques include adsorption, ion exchange, precipitation and liquid-liquid extraction.

Application of the technique of extraction with solvents by contact with an aqueous phase (in this case, phosphoric acid) and an organic phase (extractant accompanied by diluents, surfactants, modifiers, etc.) is widely used in the separation of metal ions. Within this technique of extraction with solvents, recent developments are processes such as liquid membrane permeation (LMP) with reliability of obtaining economic advantages over the above-mentioned conventional techniques, due to the simplicity of the operation and the improvement in conditions of material transfer.

Various method which employ the technique of extraction with solvents for the removal of cadmium from phosphoric acid or from aqueous solutions have been described. Among these methods may be quoted those mentioned in the following patents:

- patent DE 3127900 by Hoechst AG uses dithiophosphoric acid diesters as extraction agents;
- patent EP 0078051 by Hoechst AG which uses derivatives of dithiophosphoric, dithiophosphonic and dithiophosphinic acids as extraction agents;
- patent DE 33 27 394 by Chemische Fabrik Budenheim which uses as extraction agent an organic phase consisting of an amine salt in an organic solvent;
- patent SE 456576 B by Supra AB which uses amine salts as extraction agents;
- patent US 4,511,541 by J.R. Simplot Company which uses phosphoretted derivatives as extraction agnets; and
- patent US 4,721,605 by American Cyanamid Company which uses derivatives of dithiophosphinic acids as extraction agents.

These methods can be employed to extract cadmium from a phosphoric acid solution. However, all these methods have the drawback that they require subsequent steps of reextraction of the cadmium transferred to the organic phase, as a result of which there is an increase in the number of steps of the process, with consequent loss of reagents and investment in kits.

The method of the present invention, unlike the methods described in the patents indicated above, is based on permeation of the cadmium ions contained in a phosphoric acid solution through a liquid membrane. By the method of the present invention, extraction and reextraction of the cadmium contained in phosphoric acid solutions is carried out in a single, simple step, owing to which a lower investment in respect of kits and reagents is achieved and yields of cadmium extraction similar to the yields of the known methods are obtained.

The invention therefore relates to a method for extracting the cadmium contained in phosphoric acid solutions by the use of liquid membranes which contain a cadmium-selective extraction agent, which overcomes the drawbacks indicated above. The practically cadmium-free phosphoric acid obtained by the simple method of the invention can be used for the manufacture of phosphates useful as fertilisers.

The present invention also relates to an emulsion of the water-in-oil type suitable for selectively extracting the cadmium contained in a phosphoric acid which contains other additional ions.

## BRIEF DESCRIPTION OF THE DRAWING

The drawing which is attached to this description shows in the form of a diagram the stages and currents which occur in carrying out the method of the invention.

## BRIEF DESCRIPTION OF THE INVENTION

The invention provides a method for removing cadmium from phosphoric acid, based on transfer of the cadmium ions contained in a phosphoric acid solution (c) to an aqueous solution (a) through an organic phase (b) which acts as a membrane. This is achieved by contacting, by agitation, an emulsion of the water-in-oil type within the phosphoric acid solution to be treated, in such a way that there is a sequence of aqueous/organic/aqueous phases (a/b/c) in which the disperse aqueous phase (a) is separated from the aqueous phase (c) by the organic phase (b) which is insoluble in both and which contains the extraction agent which acts as a carrier of the cadmium ions from the external aqueous phase (c) to the internal aqueous phase (a).

## DETAILED DESCRIPTION OF THE INVENTION

The invention relates to a method for removing the cadmium contained in phosphoric acid solutions by the use of liquid membranes. Said method comprises the following steps:

a) formulating an emulsion of the water-in-oil type in which the organic phase contains the cadmium extraction agent and the disperse aqueous phase is the reextraction phase;

b) dispersing said emulsion in the phosphoric acid to be treated in such a way that transfer of the cadmium from the phosphoric acid (external aqueous phase) to the internal disperse aqueous phase of the emulsion takes place;

c) decanting the phases, as a result of which an aqueous of refined phase which contains the practically cadmium-free phosphoric acid, and the cadmium-laden emulsion, is drawn off; and

d) breaking down said laden emulsion, as a result of which there is obtained an aqueous phase containing the cadmium and a cadmium-free organic phase which is recycled to the first stage of the method after being formulated in a new emulsion by the addition of fresh disperse aqueous phase.

This method can be applied to a phosphoric acid of any origin and composition and in general to any phosphoric acid obtained by the wet process, and with a variable $P_2O_5$ content (between 24% by weight and over 50%).

The method of the invention includes, in a first stage, the formulation of an emulsion of the water-in-oil type in which the disperse aqueous phase is the reextraction phase and the organic phase contains the cadmium extraction agent. Said emulsion constitutes a novel aspect of the invention since, while its components are known, its specific formulation according to the invention and its application to the removal of cadmium contained in phosphoric acid have not been described before.

The emulsion, as mentioned above, includes two immiscible phases, an organic phase and a disperse aqueous phase.

The organic phase of said emulsion includes at least four components:

- a cadmium-selective extraction agent;
- a surfactant capable of reducing the interfacial tension between the two immiscible phases which form the emulsion;
- a modifier capable of correcting the viscosity of the organic phase; and
- a diluent which acts as a carrier and solvent of the other components.

As an extraction agent suitable for extracting cadmium, there may be used a monothiophosphoric or monothiophosphinic acid of the general formula (I)

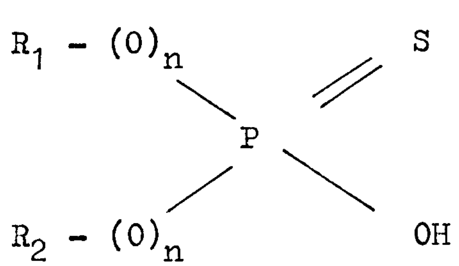

(I)

where $R_1$ and $R_2$, which may be the same or different, denote saturated or unsaturated aliphatic radicals or optionally substituted aryl or aromatic radicals and where $R_1$ and $R_2$ together have from 6 to 36 carbon atoms; and n may have values of 0 or 1 in one or both simultaneously.

Within the scope of these extraction agents of formula (I), suitable compounds are those in which $R_1$ and $R_2$ are $C_1$-$C_{18}$ alkyl, $C_5$-$C_8$ cycloalkyl, ($C_1$-$C_2$)-phenylalkyl, and ($C_1$-$C_2$)-phenylalkyl optionally substituted with halogen, hydroxy or alkoxy.

In addition, it was established that monothiophosphinic acids (n = 0) are suitable extraction agents, and among them, bis-(2,4,4-trimethylpentyl) monothiophosphinic acid provides very good results, and also it is highly cadmium-selective.

These extraction agents act as cation exchangers because at very low pH values, pH 1, they are capable of exchanging cadmium ions for hydrogen ions according to the scheme shown in the reaction (1)

$$2\,RH_{OP} + Cd^{P+}_{AP} \rightleftarrows R_2\,Cd_{FO} + 2H^{4}_{FA} \qquad (1)$$

where RH denotes the organic acid used as extraction agent; OP denotes the organic phase and AP denotes the aqueous phase.

As the surfactant there may be used any molecule capable of reducing the interfacial tension between the two phases which form the emulsion. Among these surfactants may be mentioned those normally used, such as fatty acid esters and polyamines.

As a modifier there may be used any polymer of variable molecular weight capable of correcting the viscosity of the organic phase. Polybutene-based polymers with a variable molecular weight between 1500 and 3500 have proved to be suitable as modifying agents.

As a diluent there may be used any compound which is capable of dissolving the remainder of the components and immiscible with the aqueous phase of the emulsion, on the one hand, and with the aqueous phase of the phosphoric acid to be treated, on the other hand. To formulate this emulsion there may be used aromatic hydrocarbons such as kerosene, toluene, benzene or xylene (preferably kerosene) or aliphatic hydrocarbons such as decanes or tetradecanes, or mixtures of said hydrocarbons.

The proportion by weight of the different components of the organic phase of the emulsion is variable, and may vary between

| | |
|---|---|
| - Extraction agent | 0.5 - 10% |
| - Surfactant | 0.1 - 10% |
| - Modifier | 0 - 30% |
| - Diluent | 99.4 - 50% |

all these proportions being by weight and referred to the total organic phase of the emulsion.

In particular it is preferred that said organic phase has the following composition

| | |
|---|---|
| - Extraction agent | 1 - 4% by weight |
| - Surfactant | 0.1 -2% by weight |
| - Diluent | 98.9 - 94% by weight |

The other component of the emulsion is the disperse or internal aqueous phase and forms the reextraction phase. This aqueous phase is a strong inorganic acid such as HCl, $HNO_3$, $H_2SO_4$ and the like. The presence of this inorganic acid in the disperse aqueous phase of the emulsion causes the equilibrium of the reaction (1) mentioned above to be displaced to the left, thus allowing release of the extractant organic acid molecule so that it can continue the cycle of extraction, and formation of a cadmium salt corresponding to the inorganic acid used, which is stored in the disperse aqueous phase of the emulsion.

The ratio between the organic phase and the disperse aqueous reextraction phase for forming the emulsion is variable and may vary between

| Organic Phase | Aqueous phase (volume/volume) |
|---|---|
| 10 | 1 |
| 1 | 5 |

preferably between 2:1 and 1:2.

The emulsion may be formed by agitating the organic and aqueous phases in a homogeniser in the desired volume ration.

Once the emulsion is formulated, it is dispersed in the phosphoric acid to be treated, as a result of which a sequence of phases is obtained:

phosphoric acid/membrane phase/aqueous reextraction phase in which the phosphoric acid forms the external aqueous phase of the dispersion, the membrane phase consists of the organic phase of the emulsion, and the aqueous reextraction phase is the disperse or internal aqueous phase of the emulsion. In order to facilitate contact of phases and the transfer of cadmium from the phosphoric acid (external aqueous phase) to the internal aqueous phase of the emulsion, it is appropriate to subject the dispersion obtained to mechanical agitation.

The cadmium ions present in the phosphoric acid to be treated are captured by the molecules of extractant organic acid of formula (I) present in the organic phase (extraction) and subsequently the cadmium ions are released in the internal aqueous phase of the emulsion (reextraction) due to the inorganic acid present therein, and the corresponding cadmium salt of the inorganic acid is formed, which is stored in said aqueous phase, the extractant organic acid being released and reused in another cycle of cadmium ion transfer. Both reactions of extraction and reextraction occur in the different aqueous/organic/aqueous interphases, transport of the cadmium ions thus being performed by a reversible reaction.

The ration between the emulsion and the external aqueous phase (phosphoric acid) is variable and may vary between 1:20 and 1:2 (volume/volume), preferably between 1:10 and 1:5. The temperature at which the method is carried out may be between 5ºC and 70ºC, preferably the method is carried out at ambient temperature, and the residence time may vary between approcimately 5 and 60 minutes, preferably 30 minutes.

Once cadmium transfer from the external aqueous phase to the internal aqueous phase has been completed, the aqueous or refined phase which contains the practically cadmium-free phosphoric acid, and the cadmium-laden emulsion, are separated by decanting.

The emulsion laden with the extracted cadmium is broken down by chemical methods (adding a destabilising agent) or physical methods (centrifugation, ultrasound, electric or thermal coalescence) and in this way there is released the organic phase which can return to the extraction cycle and the aqueous reextraction phase which contains the reextracted cadmium. The released organic phase which contains the extraction agent, the surfactant, the modifier and the d iluent can be formulated in a new emulsion by the addition of more aqueous reextraction phase and thus be reused in a method for removing the cadmium contained in a phosphoric acid.

Below, a particular embodiment of the method of the invention as illustrated in the drawing attached to the present description is described. The Roman numerals represent the stages of the process, and the Arabic numerals represent the currents which arise.

As can be appreciated, the first stage is emulsification (I) or formation of the emulsion. Said emulsion is formed by agitation of the aqueous reextraction phase (1) and the organic phase (2). The components of said phases have been mentioned before. The fresh emulsion (4) is dispersed in the phosphoric acid solution to be treated (3) in order for the stage of cadmium extraction/reextraction (II) to take place. The emulsion dispersed in phosphoric acid (5) is subjected to decanting and phase separation (III) and there is obtained on the one hand practically cadmium-free refined phosphoric acid (6), and on the other hand a cadmium-laden emulsion (7) which is subjected to breaking down (IV) by the conventional methods already indicated, in such a way that there is obtained a concentrated solution of a cadmium salt (8) and a regenerated organic phase (9) which can be recycled to the emulsification stage (1). Alternatively, the cadmium-laden emulsion (7) can be added to a stream of fresh emulsion (4) before being broken down and taking part in a new stage of extraction/reextraction (II).

The refined phosphoric acid (6) obtained is practically free from cadmium and can be used for the manufacture of cadmium-free fertilisers.

The advantages provided by the method of the present invention can be summed up as:

- creation of a large surface area per unit of volume (1,000-3,000 $m^2/m^3$) which allows rapid transfer of material;
- selective separation of the cadmium contained in the phosphoric acid due to the use of a suitable extraction agent;
- extraction and reextraction of the cadmium, which is carried out in a single stage;
- the molecule of the extraction agent can be used repeatedly in a multiple cycle of cadmium transfer between the two extremes of the membrane phase.

The method of the invention can be carried out continuously or discontinuously. In the continuous form, it can be carried out as follows: the acid solution for reextraction (1) is continuously mixed by a homogeniser with the organic solution (2) which contains the extraction agent plus a suitable quantity of surfactant. The emulsion formed is dispersed in the phosphoric acid to be treated (3) either in conventional mixers or in agitated columns (in counter-current). The cadmium-laden emulsion (7) is separated by decanting from the refined aqueous phase (cadmium-free phosphoric acid) (6) and subjected to the process of breaking down by any of the methods indicated above, whence is obtained an acid solution of the cadmium salt (8) and the organic phase (9) which contains the extraction agent and the surfactant which is recycled to the process.

In addition, it was found that the preferred extraction agent, to be specific bis-(2,4,4-trimethylpentyl) monothiophosphinic acid, is a highly cadmium-selective extractant. In example no. 3 there is a description of the selectivity of this extraction agent to cadmium compared with other ions such as $Zn^{24}$ and $Cu^{24}$ present in the phosphoric acid to be treated.

The following examples serve to illustrate particular embodiments of the invention and must not be considered in a limiting sense.

EXAMPLES

Example 1

Extraction of cadmium from a phosphoric acid with a $P_2O_5$ content of 30% by weight.

4 emulsions of the water-in-oil type are prepared with variable quantities of extraction agent and with aqueous reextraction phases of different composition. The formulation of these emulsions is indicated in Table I.

TABLE I

| Emulsion | I | II | III | IV |
|---|---|---|---|---|
| Component | | | | |
| 1. Organic phase: | | | | |
| - EA | 2% | 2% | 4% | 4% |
| - Surfactant | 1% | 1% | 1% | 1% |
| - Kerosene | 97% | 97% | 95% | 95% |
| 2. Aqueous phase | HCl (1) | $H_2SO_4$ (2) | HCl (1) | $H_2SO_4$ (2) |
| Ratio of organic to aqueous phase (v/v) | 2:1 | 2:1 | 2:1 | 2:1 |

The percentages are in % by weight of each component, referred to the total organic phase.

(1) The HCl used had a concentration of 20% by weight.

(2) The $H_2SO_4$ used had a concentration of 20% by weight.

EA This is the extraction agent, and in this example bis-(2,4,4-trimethylpentyl) monothiophosphonic acid was used.

Said emulsions were prepared by mixing the organic and aqueous phases in the ration of volumes indicated and by agitation at 7,000 r.p.m. in a homogeniser.

Next, each emulsion was brought into contact with a stream of phosphoric acid which contained 30% by weight of $P_2O_5$ and 47 p.p.m. of cadmium. In all cases the ration of emulsion to phosphoric acid was 1:5 by volume. The dispersion formed by the emulsion and the phosphoric acid was agitated mechanically at 200 r.p.m. at ambient temperature and for a residence time of 30 minutes. Subsequently, decanting and phase separation were carried out, obtaining an aqueous phase which contained the practically cadmium-free

refined phosphoric acid and a cadmium-laden emulsion. After breaking down the emulsion, a regenerated organic phase was obtained, which could be returned to the emulsifying stage, and an aqueous phase consisting of an aqueous solution of cadmium chloride or of cadmium sulphate, depending on the aqueous reextraction phase used. Finally, by pulse polarography with a mercury electrode the cadmium content of the refined phosphoric acid, and of the aqueous reextraction phase after breaking down the emulsion, was determined. The results obtained are shown in Table II:

TABLE II

| Emulsion | $Cd_{FAe}$(ppm) | $Cd_{FAl}$(ppm) | % Extraction |
|---|---|---|---|
| I | 3 | 710 | 94 |
| II | 11 | 669 | 77 |
| III | 1.5 | 932 | 97 |
| IV | 4 | 811 | 91 |

$Cd_{FAe}$ is the residual cadmium concentration in the refined phosphoric acid (after extraction).
$Cd_{FAl}$ is the cadmium concentration in the aqueous reextraction phase after breaking down the emulsion.
% Extraction is the percentage of cadmium removed.

In the light of the results obtained, a good yield of cadmium extraction is observed, which results in a high concentration of the cadmium present in the aqueous reextraction phase. The yield is higher when a concentration of extraction agent of 4% and HCl as the aqueous reextraction phase is used.

Example 2

Extraction of cadmium from a phosphoric acid with a $P_2O_5$ content of 40% by weight.

To carry out this example, emulsions I, II, III and IV of example 1 were used, and a methodology similar to the one described in said example was followed, with the exception that the phosphoric acid to be treated had a $P_2O_5$ content of 40% by weight and a cadmium content of 50 p.p.m. The ration between emulsion and phosphoric acid to be treated, temperature and residence times were the same as in said example 1. After transfer of the cadmium, phase separation and breaking down of the emulsion, the cadmium present in the refined phosphoric acid and in the aqueous reextraction phase was determined by the technique indicated in example 1. The results obtained are shown in Table III:

TABLE III

| Emulsion | $Cd_{FAe}$ (ppm) | $Cd_{FAl}$ (ppm) | % Extraction |
|---|---|---|---|
| I | 6 | 1340 | 87 |
| II | 27 | 549 | 46 |
| III | 3 | 1463 | 94 |
| IV | 13 | 968 | 75 |

$Cd_{FAe}$, $Cd_{FAl}$ and % Extraction have the meanings indicated in example 1.

As in example 1, it is observed that the best extraction yields are achieved at higher concentrations of extraction agent and using HCl as the aqueous reextraction phase.

Example 3

Verification of cadmium selectivity of the extraction agent (bis-(2,4,4-trimethylpentyl) monothiophosphinic acid).

A formulation of the water-in-oil type was prepared, consisting of:

- an organic phase which comprises 2% by weight of bis-(2,4,4-trimethylpentyl) monothiophosphinic acid, 1% by weight of surfactant and 97% by weight of kerosene; and
- a disperse aqueous phase consisting of 20% by weight of HCl, with a ration of organic to aqueous phase of 2:1 by volume, by agitation at 7000r.p.m. in a homogeniser.

The emulsion formed in this way was brought into contact with a stream of phosphoric acid with 24% by weight of $P_2O_5$ and an ion content of:

| | |
|---|---|
| $Cd^{24}$ | 62 ppm |
| $Cu^{24}$ | 30 ppm |
| $Zn^{24}$ | 217 ppm |

The ration of emulsion to phosphoric acid was 1:5 by volume. The emulsion was agitated within the phosphoric acid by mechanical agitation at 200 r.p.m. at ambient temperature for a residence time of 30 minutes.

After decanting and phase separation, the quantity of cadmium, cooper and zinc ions present in the refined phosphoric acid was determined, and the following results were obtained:

| Refined phosphoric acid (ions present) | ppm | % Extraction |
|---|---|---|
| $Cd^{24}$ | 6.6 | 89 |
| $Zn^{24}$ | 203 | 6 |
| $Cu^{24}$ | 26 | 13 |

In the light of these results, the marked degree of selectivity and efficiency of bis-(2,4,4-trimethylpentyl) monophosphinic acid in cadmium extraction was shown, in spite of the presence of copper and zinc ions in the phosphoric acid to be treated.

The zinc content was determined by pulse polarography with a mercury electrode, like the cadmium content, while the copper was determined by atomic absorption.

Having described the subject of the present invention, it is declared that the essence thereof consists of that which is mentioned in the following:

## Claims

**1.** Method for removing cadmium from a phosphoric acid of any origin and composition, by the use of liquid membrane techniques, characterised in that it comprises the following stages:
a) formulating an amulsion of the water-in-oil type in which the organic phase contains the cadmium extraction agent and the disperse aqueous phase is the reextraction
phase; b) dispersing said emulsion in the phosphoric acid to be treated in such a way that transfer of the cadmium from the phosphoric acid (external aqueous phase) to the disperse aqueous phase of the emulsion takes place, as a result of which cadmium extraction/reextraction occurs simultaneously and in a single step;
c) decanting the phases, as a result of which an aqueous or refined phase which contains the practically cadmium-free phosphoric acid, and the cadmium-laden emulsion, is drawn off; and
d) breaking down said laden emulsion, as a result of which there is obtained an aqueous phase containing the cadmium and a cadmium-free organic phase which is recycled to the first stage of the process after being formulated in a new emulsion by the addition of fresh disperse aqueous phase.

**2.** Method according to claim 1, characterised in that said emulsion consists of:
a) an organic phase which contains:
- a cadmium extraction agent in a concentration between 0.5% and 10% by weight referred to the total organic phase;
- a surfactant in a concentration between 0.1% and 10% by weight referred to the total organic phase;
- a modifier in a concentration between 0% and 30% by weight referred to the total organic phase; and
- a diluent in a concentration between 99.4% and 50% by weight referred to the total organic phase; and

b) a disperse aqueous phase consisting of a strong inorganic acid,
in a ratio of organic phase to aqueous phase between 10:1 and 1:5 (v/v).

**3.** Method according to claim 2, characterised in that in said emulsion

- the cadmium extraction agent is in a concentration between 1% and 4% by weight referred to the total organic phase;
- the surfactant is in a concentration between 0.1 and 2% by weight referred to the total organic phase;
- the diluent is in a concentration between 98.9% and 94% by weight referred to the total organic phase; and
- the ration of organic phase to aqueous phase is between 2:1 and 1:2 (v/v).

**4.** Method according to the preceding claims, characterised in that the cadmium extraction agent present in the organic phase of the emulsion is an organic acid of the phosphorus group of the general formula (I)

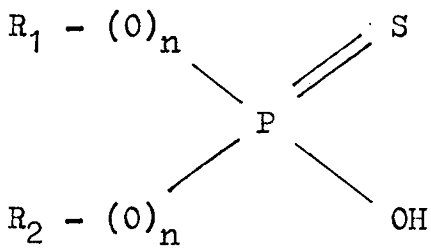

(I)

where $R_1$ and $R_2$ which may be the same or different, denote saturated or unsaturated aliphatic radicals or optionally substituted aryl or aromatic radicals and where $R_1$ and $R_2$ together have from 6 to 36 carbon atoms; and n may have values of 0 or 1 in one or both simultaneously.

**5.** Method according to claim 4, characterised in that bis-(2,4,4-trimethylpentyl) monothiophosphinic acid is used as the cadmium extraction agent.

**6.** Method according to claim 1, characterised in that the disperse aqueous phase of the emulsion consists of a strong inorganic acid in an aqueous solution.

**7.** Method according to claim 6, characterised in that said inorganic acid is selected from among hydrochloric sulphuric and nitric acids, preferably hydrochloric acid.

**8.** Method according to claim 1, characterised in that the ratio between the emulsion and the aqueous phase (phosphoric acid to be treated) is between 1:20 and 1:2 (v/v).

**9.** Method according to claim 8, characterised in that said ratio between the emulsion and the phosphoric acid is between 1:10 and 1:5 (v/v).

**10.** Method according to claim 1, characterised in that the phosphoric acid to be treated has a $P_2O_5$ content between 24% and 50% by weight.

**11.** Method according to claim 1, characterised in that it is carried out at a temperature between 5ºC and 70ºC, preferably at ambient temperature.

**12.** Method according to claim 1, characterised in that the time of residence or contact between the emulsion and the phosphoric acid to be treated is between 5 and 60 minutes, preferably 30 minutes.

**13.** Method according to claim 1, characterised in that the cadmium-free organic phase resulting from breaking down the laden emulsion is recycled to the first stage of the process after being formulated as a new emulsion by the addition of fresh aqueous phase.

**14.** Method according to claim 1, characterised in that it can be carried out continuously or discontinuously.

**15.** An emulsion of the water-in-oil type suitable for selectively extracting the cadmium contained in a phosphoric acid solution which contains other additional ions, characterised in that the latter consists of:
a) an organic phase which contains:
- bis-(2,4,4-trimethylpentyl) monothiophosphinic acid at a concentration between 0.5% and 10% by weight, preferably between 1% and 4% by weight; and
- a polymeric non-ionic surfactant at a concentration between 0.1% and 2% by weight;

diluted in a diluent consisting of aliphatic or aromatic hydrocarbons or mixtures thereof; and
b) a disperse aqueous phase consisting of an aqueous solution of a strong inorganic acid such as hydrochloric, sulphuric or nitric acid; in a ratio between organic phase and aqueous phase between 10:1 and 1:5 (volume/volume), preferably between 2:1 and 1:2.

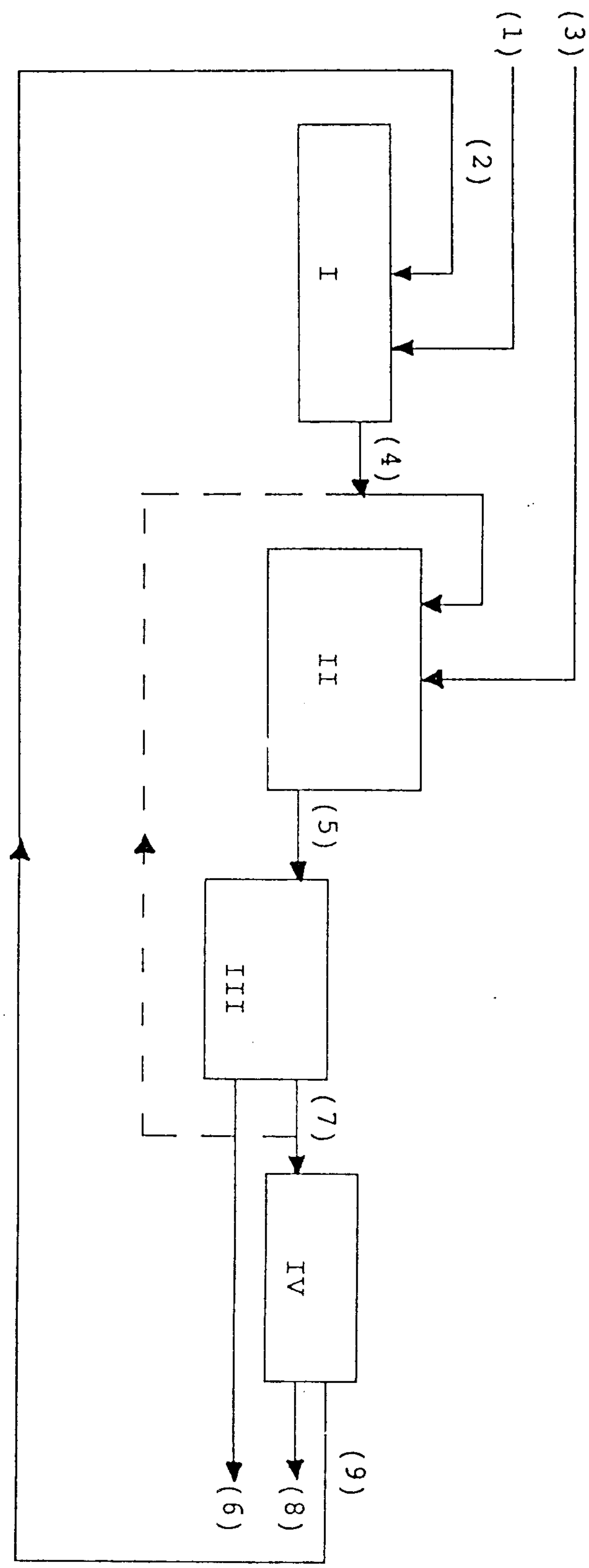
(1)
(2)
(3)
I
(4)
II
(5)
III
(7)
IV
(6)
(8)
(9)

# INTERNATIONAL SEARCH REPORT

International Application No PCT/ES91/00025

**I. CLASSIFICATION OF SUBJECT MATTER** (if several classification symbols apply, indicate all) [6]

According to International Patent Classification (IPC) or to both National Classification and IPC

Int.Cl.5 C01B 25/46, C22B 3/38

**II. FIELDS SEARCHED**

Minimum Documentation Searched [7]

| Classification System | Classification Symbols |
|---|---|
| Int.Cl.5 | C01B, C22B |

Documentation Searched other than Minimum Documentation to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| P,A | EP, A, 0400311 (CYANAMID INC.) 5 December 1990; see claims 1-10,12,13,17; page 3 lines 19-24; page 6, example 7 | 1,4,5,7,11 |
| A | US, A, 4452768 (REINHARD GRADL HURTH et al.) 5 June 1984; see claims 1-3,7; column 1, lines 58-68 | 1 |
| A | EP, A, 0023428 (BRITISH PETROLEUM CO.) 4 February 1981; see claims 1-17; page 1, lines 12-16; page 3, line 6-page 6, line 24 | 1-4,6,7,11 |
| A | EP, A, 0078051 (HOECHST) 4 May 1983 | |
| A | US, A, 4721605 (T.J. BROWN et al) 26 January 1988 | |
| A | Chemistry & Industry, No. 22, 17 November 1986, (london, GB), G. Cote et al: "Extraction of nonferrous metals by thiophosphorus extractants" pages 780-784 | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 22 August 1991 (22.08.91) | 27 September 1991 (27.09.91) |
| International Searching Authority | Signature of Authorized Officer |
| | |